# EUROPEAN PATENT SPECIFICATION

(11) **EP 3 372 380 B1**
(45) Date of publication and mention of the grant of the patent: **27.11.2019**
(21) Application number: 18160430.7
(22) Date of filing: 07.03.2018
(51) Int. Cl.: B29C 48/25

(54) **LINES AND METHOD FOR PRINTING OBLONG OBJECTS**
LINIEN UND VERFAHREN ZUM BEDRUCKEN LÄNGLICHER OBJEKTE
LIGNES ET PROCÉDÉ D'IMPRESSION D'OBJETS OBLONGS

(30) Priority: 07.03.2017 IT 201700025030
(43) Date of publication of application: 12.09.2018
(73) Proprietor: Jet-Set Srl, 40026 Imola (BO) (IT)
(72) Inventor: Ferrari, Sergio, 24036 Ponte San Pietro (BG) (IT)
(74) Representative: Petraz, Gilberto Luigi

(56) References cited:
- CN-A- 101 323 218
- DE-A1- 2 542 649

## Description

The present invention relates to the technical field of lines for printing oblong objects preferably made of plastics, which are manufactured through an extrusion process. In particular, the present invention relates to a printing method and line allowing to print graphical signs on extruded objects having their length dimension prevailing on the dimension of their transversal sections.

As a non-limiting example, the present invention can be applied to piping or profiles, and according to a feature of the present invention, the printing step is performed directly in the production line of the oblong objects, i.e. immediately after their production through extrusion.

Printing graphical signs on various kinds of objects made through extrusion is known, for example on piping or profiles, for example to mark the name of the producer and/or a bar code and/or a production batch number.

Nonetheless, it is also known that the surface of the extruded object cannot be directly printed if it is not previously prepared for printing (cf. e.g. DE2542649).

In fact, said piping or profile after its extrusion is normally propelled supporting it on small rollers, and its external surface is generally wet with liquids or lubricants. In addition, the surface temperature of extruded object is higher than room temperature, and this further complicates printing operations.

As a consequence, up to today embodiments allow the printing of extruded objects with heavy limitations to the kind of printing: typically, extruded objects can be printed using one colour only, through pad printing.

The use of plasma chambers under vacuum for preparing the surface of objects and make them suitable to successive printing is also known. In particular, the extruded objects are cut to size and inserted in a chamber under vacuum, and then the objects undergo the cleaning action of plasma to clean their surface. After plasma cleaning, the objects are inserted into a printing machine suitable for printing graphical signs. Normally, all these passages have to be performed manually. A further drawback of this embodiment comes from the dimensional limitations of the vacuum-generating chamber. In fact, vacuum chamber dimensions condition the length of the object to be treated, and this greatly restrict the length of said objects.

It is known that plasma can be generated only under vacuum; nonetheless, generating vacuum in an apparatus wherein there is a continuous supply of objects to be printed is anything but easy.

Therefore, aim of the present invention is realizing a printing line allowing to print graphical signs directly in the production line on piping or profiles leaving the extrusion apparatus.

Another aim of the present invention is realizing a printing line allowing to print graphical signs on the surface of oblong, just extruded objects in a fast and effective way.

A further aim of the present invention is to allow polychromatic printing of graphical signs on just-extruded objects

These objects are achieved by a method and an apparatus having the features of the independent claims. Advantageous embodiments and refinements are specified in claims dependent thereon.

In accordance with the above-stated aims, a printing line for printing graphical signs on an oblong object according to the present invention comprises:
- an extrusion apparatus for the extrusion of an oblong object like piping or profile;
- a treatment apparatus configured to treat and clean at least a surface of said oblong object through the generation of plasma under vacuum;
- a printing apparatus to print graphical signs on the treated surface of the oblong object;
The three above-quoted apparatuses are placed in series on the same manufacturing line, along a common working axis.

In accordance with a possible embodiment, the printing line further comprises a cutting apparatus to cut the extruded object to size. The cutting apparatus is aligned to said working axis, and can advantageously be placed downstream the printing apparatus.

The method according to the present invention comprises the following steps:
- extruding a suitable material to produce an oblong object like a piping or a profile;
- treating, through plasma generation, at least a surface of said oblong object;
- printing graphical signs on the surface of the extruded object.

Moreover, the method according to the present invention provides that extrusion, plasma treatment and printing are performed in series, one after the other, along a common working axis.

The method according to the present invention can further comprise the cutting of the extruded object into segments of pre-defined length. Said cutting is performed in series along said working axis. Moreover, said cutting can be performed after the printing of graphical signs on the oblong objects.

A first advantage of the present invention is the possibility of printing objects that up to today had proved impossible to print.

A second advantage of the present invention is the possibility of printing oblong objects making use of a plasma generator with a continuous supply of the objects to be printed.

A third advantage is the versatility of the production line, which allows to print different objects, e.g. piping having different diameters and different lengths, and without dimensional restrictions in the length of said objects.

A fourth advantage is the possibility to print graphical signs also with four-colour printing, with respect to the known art, which allows to print one colour only.

Further advantages and features of the present invention are disclosed in the following description, in which exemplary embodiments of the present invention are explained in detail based on the drawing:
- Figure 1: is an axonometric view of the printing line to print graphical signs on extruded objects according to the present invention;
- Figure 2: is an axonometric view of the treatment apparatus with plasma having flanges of different diameters for printing extruded objects having different diameters;

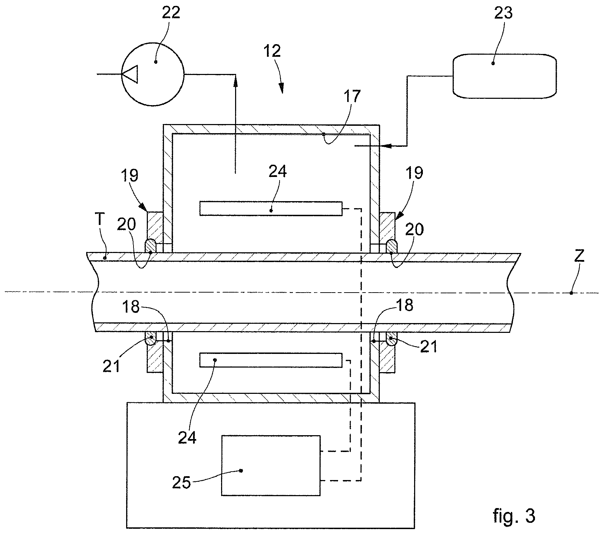

- Figure 3: is a schematic section view of a plasma treatment apparatus.

### DETAILED DESCRIPTION OF SOME EMBODIMENTS

In the present invention, reference will be made to a printing line of oblong objects like piping without losing any generality, knowing that the same method and apparatus can be applied to the production of any profile, even non-tubular profiles, having one prevalent dimension in length, and a transversal section having any shape.

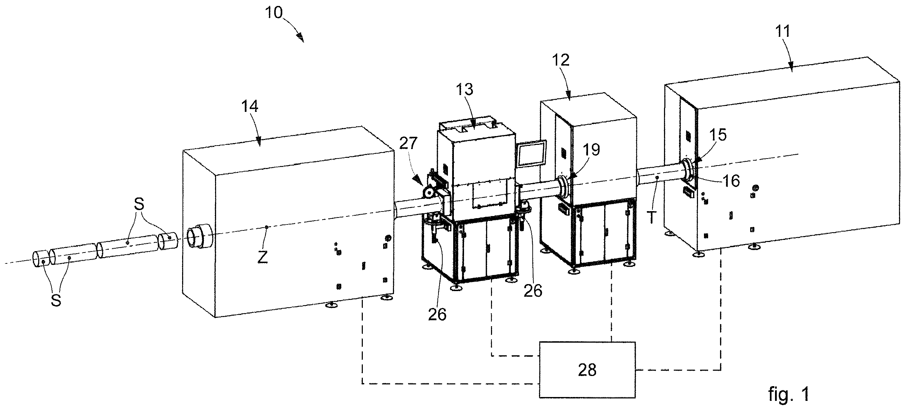

Figure 1 shows a printing line 10 for printing piping T, comprising:
- an extruding apparatus 11 to extrude piping T;
- a treatment apparatus 12 to generate plasma under vacuum and clean at least part of a surface of the piping T which were extruded;
- a printing apparatus 13 to print one or more graphical signs on said piping T.

In accordance with a feature of the present invention, said extruding apparatus 11, treatment apparatus 12 and printing apparatus 13 are placed one after the other, along a common working axis Z.

According to a possible embodiment of the present invention, the printing line 10 further comprises a cutting apparatus 14 for cutting said extruded and printed piping T into segments S having the desired length. Said cutting apparatus 14 is placed downstream said printing apparatus 13 and is aligned to the working axis Z, too.

According to a possible embodiment, said extrusion apparatus 11 can be configured to heat at least a polymeric material up to its softening temperature, and successively channelling it under pressure through an extrusion head 15, inside which piping T is formed.

Said extrusion head 15 is aligned along said working axis Z.

Said extrusion head 15 is designed according to the dimensions and shape of the piping T to be produced. In the same way, in the case of profile manufacturing, said extrusion head 15 is opportunely dimensioned and designed for the specific shape and dimension of the profile to be produced.

Said extrusion head 15 is provided with at least an extrusion flange 16, defining the shape and dimensions of the piping or profile to be produced.

In the case of production of piping T, said extrusion head 15 can be provided with a male body, not shown in the Figures, positioned in the through cavity of the extrusion flange 16 and defining with it a passage opening having shape and dimensions conjugated to the transversal section of the piping T to be produced.

The polymeric material can be provided to the extrusion apparatus 11 under the form of pellets and/or granules of polymeric material.

As a not-limiting example, the polymeric material can be chosen from a group comprising at least one among high-density polyethylene (HDPE), polyvinylchloride (PVC), polypropylene (PP) and suchlike.

Moreover, said extrusion apparatus 11 is provided with compression and advancing means placed upstream said extrusion head 15, provided to compress and thrust said polymeric material through said extrusion head 15, so determining the advance of the extruded piping T.

To said compression and advancing means, heating means can be associated, in order to bring said polymeric material to its softening temperature.

In accordance with possible embodiments, said compression and advancing means determine the advancement of piping T through all the apparatuses composing the printing line 10 according to the present invention, that is along the working axis Z.

Said piping T leaving said extrusion apparatus 11 is inserted into said treatment apparatus 12 provided to clean at least a part of at least a surface of said piping T through plasma.

In accordance with a possible embodiment, said treatment apparatus 12 can be provided with a substantially closed treatment chamber 17.

Said treatment chamber 17 is provided with two passage apertures 18, further aligned to the working axis Z, through which said piping T respectively enters into and leaves from said treatment chamber 17.

According to possible embodiments, to said passage apertures 18 sealing flanges 19 are associated, each provided with a passage aperture 20, having shape and dimensions conjugated to those of the piping T provided by the extrusion apparatus 11. Said sealing flanges 19 are further provided with pneumatic sealing elements 21, defining said passage aperture 20 and placeable as a support on the whole external peripheral surface of said piping T passing through said passage apertures 18.

Said sealing elements 21 hermetically close the treatment chamber 17 and allow the generation of a vacuum condition inside it, as described in the following.

Said sealing elements 21 can comprise, e.g., seals or gaskets.

According to a variant embodiment, said sealing elements 21 can comprise pneumatically inflatable chambers, whose expansion determines the action of pneumatic sealing on the peripheral surface of the piping T. Said embodiment is particularly advantageous, in that possibly wear of the sealing element 21 can be directly compensated. It further allows to increase the adherence surface of the sealing element 21 on the piping T.

Moreover, the presence of pneumatically inflatable chambers easies the initial operation of fitting piping T through said sealing flanges 19, in that initially said inflatable chambers can be deactivated, and therefore they do not interfere with the correct introduction of piping T.

Said sealing flanges 19 can selectively be replaced, with respect to the treatment chamber 17, for example to adapt them to the specific shape and dimensions of the piping T or profile under production.

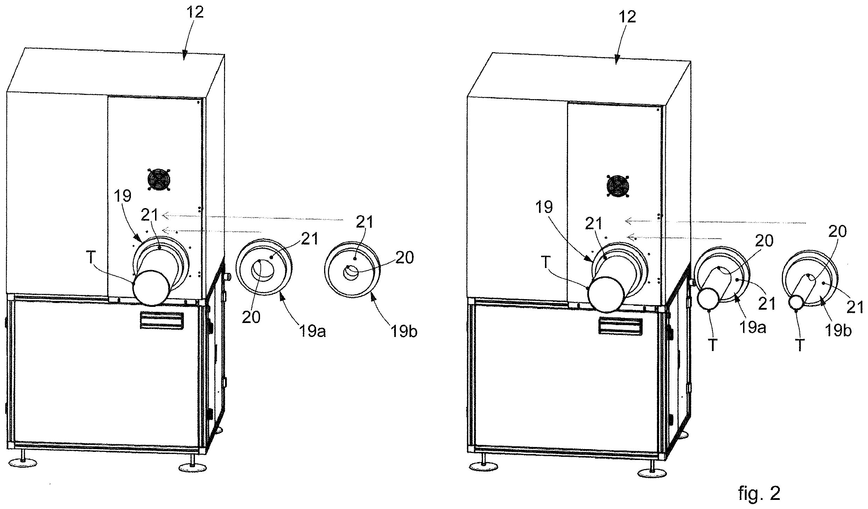

Only by way of non-limiting example, Figure 2 shows said treatment apparatus 12 with a piping T having e.g. a diameter of 20 cm in transit through said treatment apparatus 12. Said treatment apparatus 12 is provided with sealing flanges 19, 19a, 19b having different diameters of their passage aperture 20. Replacing the sealing flange 19 with flange 19a or 19b, it is possible to obtain sealing on extruded piping T having different diameters, for example 10 cm for flange 19a and 5 cm for flange 19b. It will be obvious to the skilled man in the art that the same can be done for obtaining profiles having different sections and dimensions.

In accordance with embodiments of the present invention, said treatment apparatus 12 is provided with a vacuum-generating device 22 associated with said treatment chamber 17 to generate a condition of vacuum inside it.

Only by way of a non-limiting example, the vacuum-generating device 22 can generate inside said treatment chamber 17 a pressure ranging 10⁻³ - 10⁻⁷ mbar.

In accordance with further embodiments of the present invention, said treatment apparatus 12 can comprise an introduction device 23 associated with said treatment chamber 17, and provided to introduce a process gas inside the latter.

Said process gas can comprise at least one among oxygen, argon, nitrogen, acetylene, or air.

In accordance with further embodiments, said treatment apparatus 12 can comprise electrodes 24, also called targets, installed inside said treatment chamber 17, and connected to a controller 25 provided to generate a potential difference between said two electrodes 24.

The high voltage, to which said electrodes 24 undergo, generates a ionization of the gas atoms of the process gas, and therefore the generation of plasma. The generated ions are accelerated, and impacting on the surface of piping T, lead to a cleaning action of its surface.

The action of plasma allows to remove organic contaminants or residual layers, and allows to provide a surface capable of actively reacting with the contact polymers like inks or paints used in the printing process.

The piping T leaving said treatment apparatus 12 is provided to said printing apparatus 13.

The printing apparatus 13 allows to print graphical signs on the produced piping T, like e.g. letters, number, barcodes, images, logos, or desired technical specifications etc.

Said printing apparatus 13 can be suitable for digitally printing said graphical signs on the piping T.

Said printing apparatus 13 can be of the inkjet type.

Said printing apparatus 13 can comprise a plurality of printing groups, each provided to print a different printing liquid, e.g. inks of different colours. For example, said printing apparatus 13 can be configured to perform four-colour printing.

Moreover, upstream and/or downstream said printing apparatus 13 there can be provided support elements 26 to support said piping T during the printing process.

Said support elements 26 can be defined by sliding rollers placed, in use, under said piping T and in contact with it.

Said printed piping T can be successively fed to said cutting apparatus 14, which cuts said piping T into segments S having the desired final lengths.

Figure 1 shows four segments S of piping T having different lengths. Said cutting apparatus 14 can cut said segments S both of the same length and of different lengths.

Said cutting apparatus 14 can comprise a dynamic cutter cutting said piping T at desired lengths.

It is worth noting that piping T is a unique continuous piece from its exit from said extrusion apparatus 11 up to the moment when it enters into said cutting apparatus 14, and that the flow time through the entire printing line 10 is driven by the speed with which piping T is extruded.

Said cutting apparatus 14 can comprise a not illustrated measuring device, configured to detect the length of the piping T advancing in the apparatus, and to determine the activation of the cutting.

In accordance with a possible embodiment, said measuring device can comprise a roller, placed in use as a support to, or in contact with, said piping T under process, and to which detecting devices are associated, provided to detect the rotating speed of said roller. According to the rotation speed detected, an estimate of the length of piping T can be obtained.

According to possible embodiments, said printing line 10 can comprise a detecting device 27 provided for detecting the advancing speed of said piping T through said printing line 10.

In accordance with possible embodiments, said detecting device 27 is installed at the exit of said printing apparatus 13, and can itself provide information about the length measures of said piping T, which successively is cut by said cutting apparatus 14.

According to possible embodiments, said detecting device 27 can have a shape substantially analogous to said above-described measuring device of the cutting apparatus 14.

In accordance with a feature of the present invention, said printing line 10 comprises a control and management unit 28 connected at least to said extrusion apparatus 11, treatment apparatus 12, and printing apparatus 13 to manage their coordinated working

According to possible embodiments, said control and management unit 28 can be further connected to said cutting apparatus 14 to determine its activation according to the working modes of apparatuses 11, 12 and 13.

According to a possible embodiment, the control and management unit 28 can also be connected to said detecting device 27, to receive information about the advancing of piping T, and determine the working modes of each apparatus 11, 12, 13 and optionally 14.

In accordance with a possible embodiment, the extrusion speed drives the production speed of the printing line 10. Once piping T was extruded, it must remain inside the plasma-generating treatment apparatus 12 for a pre-set time. As a consequence, the power of plasma managed by controller 25 must be fitted to the flow time of piping T: if flow time is high, plasma power must be increased correspondingly. Said control and management unit 28 manages said control of the working of printing line 10.

In the same way, said control and management unit 28 coordinates the setting of said printing apparatus 13, which adapts to the flow time of said extrusion apparatus 12. The setting of said printing apparatus 13 can be managed by said control and management unit 28, also with respect to the information received by said detecting device 27 about the flow time of piping T.

It is worth noting that the parameters concerning: power of plasma, flow time of piping T in treatment apparatus 12, print speed of printing apparatus 13, flow time of cutting apparatus 14 must be empirically set for each production batch, which can comprise different plastic materials, different thicknesses of the material to be extruded, different extrusion speed. Once said parameters have been empirically detected, they can be inputted in said control and management unit 28, and then the printing line 10 can automatically adapt all the parameters according to the features of the extrusion process.

Only by way of example, in the control and management unit 28 technical specifications of the objects to be produced can be set, like the diameter of piping T, the final length of segments S of piping T, the graphical signs to be printed on piping T, the number of colours to be printed.

It is apparent that when the dimensions of the extruded object change (e.g. from a piping having a diameter of 20 cm to a piping having a diameter of 10 cm), both the extrusion apparatus 11 and the treatment apparatus 12 for the generation of plasma under vacuum must be manually set, for example to replace at least said extrusion head 15 and said sealing flanges 19, respectively.
- 10: Printing line
- 11: Extrusion apparatus
- 12: Treatment apparatus
- 13: Printing apparatus
- 14: Cutting apparatus
- 15: Extrusion head
- 16: Extrusion flange
- 17: Treatment chamber
- 18: Passage aperture
- 19: Sealing flange
- 20: Passage aperture
- 21: Sealing element
- 22: Vacuum-generating device
- 23: Introduction device
- 24: Electrodes
- 25: Controller
- 26: Support elements
- 27: Detecting device
- 28: Control and management unit
- S: Segments
- T: Piping
- Z: Working axis

## Claims

1. Line (10) for printing graphical signs on an oblong object (T), like a piping or a profile, comprising: an extrusion apparatus (11) to extrude said oblong object (T); a treatment apparatus (12) to treat and clean, through plasma generation, at least a surface of said oblong object (T); a printing apparatus (13) to print graphical signs on said surface of said oblong object (T); **characterized in that** said extrusion apparatus (11), said treatment apparatus (12) and said printing apparatus (13) are placed in series along a common working axis (Z).

2. Line (10) according to claim 1, further comprising a control and management unit (28) connected at least to said extrusion apparatus (11), said treatment apparatus (12) and said printing apparatus (13) to manage their coordinate working.

3. Line (10) according to claim 2, further comprising a detecting device (27) provided to detect the advancing speed of said oblong object (T), said control and management unit (28) being connected to said detecting device (27) to receive information about the advancement of said oblong object (T) and to determine the working mode of at least said extrusion apparatus (11), said treatment apparatus (12) and said printing apparatus (13).

4. Line (10) according to any of the preceding claims, wherein said treatment apparatus (12) comprises a treatment chamber (17) provided with two aligned passage apertures (18), aligned along said working axis (Z), through which said oblong object (T) enters and leaves, sealing flanges (19) being associated to said passage apertures (18) each sealing flange (19) being provided with a through aperture (20) having shape and dimensions conjugated to those of said oblong object (T) produced by said extrusion apparatus (11).

5. Line (10) according to claim 4, wherein said sealing flanges (19) are provided with pneumatic sealing elements (21), said sealing elements (21) defining a through aperture (20) and being placeable, in use, as a support on the whole external peripheral surface of said oblong object (T) to hermetically close said treatment chamber (17) and allow the generation of a vacuum condition inside said treatment chamber (17).

6. Line (10) according to any of the preceding claims, further comprising a cutting apparatus (14) to cut into segments (S) said extruded object (T), said cutting apparatus (14) being aligned along said working axis (Z).

7. Line (10) according to claim 6, wherein said cutting apparatus (14) is placed downstream said printing apparatus (13).

8. Method for printing graphical signs on an oblong object (T), the method comprising the following steps:
- the extrusion of a material to produce said oblong object (T), like a piping or a profile;
- the treatment, through plasma generation, of at least a surface of said oblong object (T), and
- the printing of graphical signs on the surface of said extruded object, wherein the extrusion, the plasma treatment and the printing are performed in sequence along a common working axis (Z).

9. Method according to claim 8, further comprising the cutting into segments (S) of said extruded object, performed along said working axis (Z), wherein said cutting into segments (S) is performed after the printing of said graphical signs.

## Patentansprüche

1. Anlage (10) zum Drucken von grafischen Zeichen auf ein langgestrecktes Objekt (T), wie eine Rohrleitung oder ein Profil, aufweisend: eine Extrusionsvorrichtung (11) zum Extrudieren des langgestreckten Objekts (T), eine Behandlungsvorrichtung (12) zum Behandeln und Reinigen mindestens einer Oberfläche des langgestreckten Objekts (T) durch Plasmaerzeugung, eine Druckvorrichtung (13) zum Drucken von grafischen Zeichen auf die Oberfläche des langgestreckten Objekts (T), **dadurch gekennzeichnet, dass** die Extrusionsvorrichtung (11), die Behandlungsvorrichtung (12) und die Druckvorrichtung (13) in Reihe entlang einer gemeinsamen Arbeitsachse (Z) angeordnet sind.

2. Anlage (10) gemäß Anspruch 1, ferner aufweisend eine Steuer- und Verwaltungseinheit (28), die mindestens mit der Extrusionsvorrichtung (11), der Behandlungsvorrichtung (12) und der Druckvorrichtung (13) verbunden ist, um deren koordiniertes Arbeiten zu verwalten.

3. Anlage (10) gemäß Anspruch 2, ferner aufweisend eine Detektionsvorrichtung (27), die zum Detektieren der Vorrückgeschwindigkeit des langgestreckten Objekts (T) vorgesehen ist, wobei die Steuer- und Verwaltungseinheit (28) mit der Detektionsvorrichtung (27) verbunden ist, um Informationen über das Vorrücken des langgestreckten Objekts (T) zu empfangen und den Arbeitsmodus mindestens der Extrusionsvorrichtung (11), der Behandlungsvorrichtung (12) und der Druckvorrichtung (13) zu bestimmen.

4. Anlage (10) gemäß irgendeinem der vorhergehenden Ansprüche, wobei die Behandlungsvorrichtung (12) eine Behandlungskammer (17) aufweist, die mit zwei ausgerichteten Durchgangsöffnungen (18) versehen ist, die entlang der Arbeitsachse (Z) ausgerichtet sind, durch die das langgestreckte Objekt (T) eintritt und austritt, wobei den Durchgangsöffnungen (18) Dichtungsflansche (19) zugeordnet sind, wobei jeder Dichtungsflansch (19) mit einer Durchgangsöffnung (20) versehen ist, deren Form und Abmessungen mit denen des langgestreckten Objekts (T), das durch die Extrusionsvorrichtung (11) erzeugt wird, zusammenpassen.

5. Anlage (10) gemäß Anspruch 4, wobei die Dichtungsflansche (19) mit pneumatischen Dichtungselementen (21) versehen sind, wobei die Dichtungselemente (21) eine Durchgangsöffnung (20) definieren und im Gebrauch als eine Stütze auf der gesamten Außenumfangsfläche des langgestreckten Objekts (T) platzierbar sind, um die Behandlungskammer (17) hermetisch zu schließen und das Erzeugen eines Vakuumzustands innerhalb der Behandlungskammer (17) zu ermöglichen.

6. Anlage (10) gemäß irgendeinem der vorhergehenden Ansprüche, ferner aufweisend eine Schneidvorrichtung (14) zum Schneiden des extrudierten Objekts (T) in Segmente (S), wobei die Schneidvorrichtung (14) entlang der Arbeitsachse (Z) ausgerichtet ist.

7. Anlage (10) gemäß Anspruch 6, wobei die Schneidvorrichtung (14) stromabwärts von der Druckvorrichtung (13) angeordnet ist.

8. Verfahren zum Drucken von grafischen Zeichen auf ein langgestrecktes Objekt (T), wobei das Verfahren die folgenden Schritte aufweist:
- das Extrudieren eines Materials, um das langgestreckte Objekt (T), wie eine Rohrleitung oder ein Profil, herzustellen,
- das Behandeln, durch Plasmaerzeugung, mindestens einer Oberfläche des langgestreckten Objekts (T), und
- das Drucken von grafischen Zeichen auf die Oberfläche des extrudierten Objekts,
wobei das Extrudieren, die Plasmabehandlung und das Drucken nacheinander entlang einer gemeinsamen Arbeitsachse (Z) durchgeführt werden.

9. Verfahren gemäß Anspruch 8, ferner aufweisend das Schneiden des extrudierten Objekts in Segmente (S), das entlang der Arbeitsachse (Z) durchgeführt wird, wobei das Schneiden in Segmente (S) nach dem Drucken der grafischen Zeichen erfolgt.

## Revendications

1. Ligne (10) pour imprimer des signes graphiques sur un objet oblong (T), comme une tuyauterie ou un profilé, comprenant : un appareil d'extrusion (11) pour extruder ledit objet oblong (T) ; un appareil de traitement (12) pour traiter et nettoyer, par génération de plasma, au moins une surface dudit objet oblong (T) ; un appareil d'impression (13) pour imprimer des signes graphiques sur ladite surface dudit objet oblong (T) ; **caractérisée par le fait que** ledit appareil d'extrusion (11), ledit appareil de traitement (12) et ledit appareil d'impression (13) sont placés en série le long d'un axe de fonctionnement commun (Z).

2. Ligne (10) selon la revendication 1, comprenant en outre une unité de commande et de gestion (28) connectée au moins audit appareil d'extrusion (11), audit appareil de traitement (12) et audit appareil d'impression (13) pour gérer leur fonctionnement coordonné.

3. Ligne (10) selon la revendication 2, comprenant en outre un dispositif de détection (27) fournie pour détecter la vitesse d'avancement dudit objet oblong (T), ladite unité de commande et de gestion (28) étant connectée audit dispositif de détection (27) pour recevoir des informations sur l'avancement dudit objet oblong (T) et pour déterminer le mode de fonctionnement d'au moins ledit appareil d'extrusion (11), ledit appareil de traitement (12) et ledit appareil d'impression (13).

4. Ligne (10) selon l'une quelconque des revendications précédentes, où ledit appareil de traitement (12) comprend une chambre de traitement (17) pourvue de deux ouvertures de passage alignées (18), alignées le long dudit axe de fonctionnement (Z), à travers lesquelles ledit objet oblong (T) entre et sort, des brides d'étanchéité (19) étant associées auxdites ouvertures de passage (18), chaque bride d'étanchéité (19) étant pourvue d'une ouverture passante (20) ayant une forme et des dimensions conjuguées à celles dudit objet oblong (T) produite par ledit appareil d'extrusion (11).

5. Ligne (10) selon la revendication 4, où lesdites brides d'étanchéité (19) sont pourvues d'éléments d'étanchéité pneumatiques (21), lesdits éléments d'étanchéité (21) définissant une ouverture passante (20) et pouvant être placés, lors de l'utilisation, en tant que support sur la totalité de la surface périphérique externe dudit objet oblong (T) pour fermer hermétiquement ladite chambre de traitement (17) et permettre la génération d'une condition de vide à l'intérieur de ladite chambre de traitement (17).

6. Ligne (10) selon l'une quelconque des revendications précédentes, comprenant en outre un appareil de coupe (14) pour couper en segments (S) ledit objet extrudé (T), ledit appareil de coupe (14) étant aligné le long dudit axe de fonctionnement (Z).

7. Ligne (10) selon la revendication 6, où ledit appareil de coupe (14) est placé en aval dudit appareil d'impression (13).

8. Méthode pour imprimer de signes graphiques sur un objet oblong (T), la méthode comprenant les étapes suivantes :
- l'extrusion d'un matériau pour produire ledit objet oblong (T), tel qu'une tuyauterie ou un profilé ;
- le traitement, par génération de plasma, d'au moins une surface dudit objet oblong (T), et
- l'impression de signes graphiques sur la surface dudit objet extrudé,
où l'extrusion, le traitement au plasma et l'impression sont effectués en séquence le long d'un axe de fonctionnement commun (Z).

9. Méthode selon la revendication 8, comprenant en outre la coupe en segments (S) dudit objet extrudé, effectuée le long dudit axe de fonctionnement (Z), où ladite coupe en segments (S) est effectuée après l'impression desdits signes graphiques.
